# EUROPEAN PATENT SPECIFICATION

(11) **EP 2 901 840 B1**
(45) Date of publication and mention of the grant of the patent: **16.05.2018**
(21) Application number: 14177619.5
(22) Date of filing: 18.07.2014
(51) Int. Cl.: A01D 34/00, G05D 1/02

(54) **LAWN MOWER ROBOT AND METHOD OF CONTROLLING THE SAME**
RASENMÄHROBOTER UND VERFAHREN ZUR STEUERUNG
ROBOT TONDEUSE ET PROCÉDÉ DE COMMANDE

(30) Priority: 29.01.2014 KR 20140011044
(43) Date of publication of application: 05.08.2015
(73) Proprietor: LG Electronics Inc., Seoul 150-721 (KR)
(72) Inventor: Nam, Dongkyun, 153-802 Seoul (KR); Woo, Jongjin, 153-802 Seoul (KR); Kim, Dongseong, 153-802 Seoul (KR)
(74) Representative: Vossius & Partner Patentanwälte Rechtsanwälte mbB

(56) References cited:
- EP-A1- 2 296 005
- CN-A- 102 890 505
- US-A1- 2014 012 418

## Description

The present invention relates to a lawn mower robot and a method of controlling the same, and more particularly, to a lawn mower robot in which a position of a main body may be identified on the basis of a boundary, and a method of controlling the same.

A lawn mower is an apparatus for mowing a lawn planted in a home's yard, a playground, or the like. Such a lawn mower is classified into a home type and a tractor type used in a wide playground or farm.

The lawn mower for home is classified into a walk behind type for mowing the lawn while a person directly drags the lawn mower from behind and a directly hand carrying type.

However, there are burdens in that persons should directly operate all of two types of lawn mowers.

Particularly, since it is difficult to mow the lawn of the yard by directly operating the lawn mower by a user in today's busy daily life, it is usual to hire outside persons for mowing the lawn, to thereby generate hiring costs.

Accordingly, an automatic robot type lawn mower has been developed in order to prevent generation of additional costs and reduce a user's burden. Many studies have been carried out in order to control the automatic robot type lawn mower such that the automatic robot type lawn mower is present within a desired region.

CN 102 890 505 relates to a boundary system, comprising a boundary line, a signal generation device, a signal detection unit and a control unit, wherein the signal generation device is used for generating a preset boundary signal and sending the preset boundary signal to the boundary line, and a magnetic filed can be generated when the preset boundary signal passes through the boundary line; the signal detection unit is arranged in an automatic walking device and is used for detecting the magnetic filed and generating a detection signal; the control unit is arranged in the automatic walking device and is used for receiving the detection signal and judging whether the automatic walking device is located in a working area or not.

Accordingly, the present invention is directed to a lawn mower robot and a method of controlling the same that substantially obviates one or more problems due to limitations and disadvantages of the related art.

An object of the present invention is to provide a lawn mower robot and a method of controlling the same.

This object is achieved with the features of the independent claims. The dependent claims relate to aspect of the invention.

Another object of the present invention is to provide a lawn mower robot in which a position of a main body may be identified on the basis of a boundary, and a method of controlling the same.

Another object of the present invention is to provide a lawn mower robot and a method of controlling the same, capable of sensing whether a main body is present inside or outside an operation region by sensing signals generated by a boundary wire.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of controlling a lawn mower robot includes receiving a signal generated by a boundary wire, determining a maximum value and a minimum value of the received signal for a predetermined time and a respective constant maximum value range and a respective constant minimum value range, and determining a position of a main body, which receives the signal, relative to the boundary wire by identifying and comparing the number of upper inflection portions present within a constant maximum value range and the number of lower inflection portions present within a constant minimum value range for the predetermined time, wherein each of the upper inflection portions means a portion at which a waveform of the signal is changed from ascending to descending and each of the lower inflection portions means a portion at which a waveform of the signal is changed from descending to ascending.

In another aspect of the present invention, a lawn mower robot includes a boundary mark portion which has a boundary wire generating a specific signal, and a main body which receives the signal generated by the boundary wire and is driven in a certain region, wherein the main body includes a receiving portion which receives the signal transmitted from the boundary wire, and a controller which analyzes a waveform of the signal received in the receiving portion to determine a maximum value and a minimum value for a predetermined time, identifies the number of upper inflection portions present within a constant maximum value range and the number of lower inflection portions present within a constant minimum value range, and compares the number of the upper inflection portions with the number of the lower inflection portions to determine a position of the main body relative to the boundary wire, and each of the upper inflection portions means a portion at which a waveform of the signal is changed from ascending to descending and each of the lower inflection portions means a portion at which a waveform of the signal is changed from descending to ascending.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a top view illustrating a main body of a lawn mower robot according to an embodiment of the present invention;
FIG. 2 is a block diagram of the lawn mower robot in FIG. 1;
FIG. 3 is a control flowchart according to an embodiment of the present invention;
FIG. 4 is a view for explaining arrangement of a waveform received in an inside region defined by a boundary wire, the main body, and the boundary wire; and
FIG. 5 is a view for explaining arrangement of a waveform received in an outside region defined by the boundary wire, the main body, and the boundary wire.

Reference will now be made in detail to the preferred embodiments of the present invention, examples of which are illustrated in the accompanying drawings.

In the description, the size or shape of each component illustrated in the drawings may be exaggerated for convenience of description and clarity. In addition, terms defined in consideration of configurations and functions of the present invention may vary with the intention or practice of a user or an operator. Therefore, such terms should be defined based on the entire content disclosed herein.

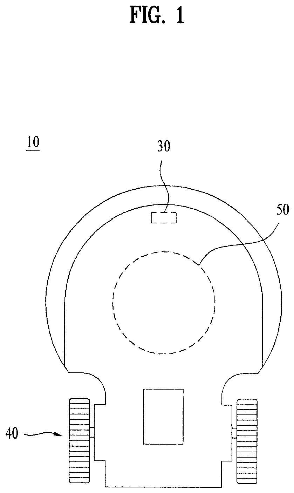

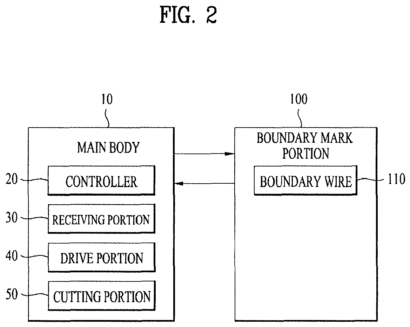

FIG. 1 is a top view illustrating a main body of a lawn mower robot according to an embodiment of the present invention. FIG. 2 is a block diagram of the lawn mower robot in FIG. 1. Hereinafter, a description will be given with reference to FIGs. 1 and 2.

The lawn mower robot may include a main body 10 movable to cut a lawn and a boundary mark portion 100 defining an operation region in which the main body 10 operates during movement thereof.

The boundary mark portion 100 includes a boundary wire 110 defining a boundary of the operation region and may include a station capable of supplying current to the boundary wire 110. That is, the boundary wire 110 may be connected to the station so as to generate electromagnetic waves by the current supplied from the station.

The main body 10 of the lawn mower robot may include a cutting portion 50 capable of cutting a lawn. The cutting portion 50 may have sharp blades configured to be rotatable.

The main body 10 includes a drive portion 40 which may move and rotate the main body 10 in a desired direction. The drive portion 40 may include a plurality of rotatable wheels each of which may be individually rotated, so that the main body 10 may be rotated in a desired direction.

The main body 10 may include a receiving portion 30 which may receive signals generated by the boundary wire 110. The receiving portion 30 receives electromagnetic waves generated by the current flowing in the boundary wire 110, thereby being capable of acquiring information about whether the main body 10 reaches the boundary wire 110, whether the main body 10 is present within a closed curved surface formed by the boundary wire 110, whether the main body 10 is driven along the boundary wire 110, and the like.

The main body 10 may drive the drive portion 40 using the information received by the receiving portion 30. That is, a controller 20 may control driving of the main body 10 using the information received by the receiving portion 30. In addition, the controller 20 may also establish a map of the operation region defined by the boundary wire 110 by acquiring coordinate information according to a movement trajectory of the main body 10 while the main body 10 moves along the boundary wire 110.

In particular, the controller 20 may set a starting point from which the main body 10 moves before beginning to operate by means of the coordinate information of the operation region. The controller 20 may control the drive portion 40 such that the main body 10 moves to the starting point.

In addition, the controller 20 may allow the cutting portion 50 to be driven after the main body 10 moves to the operation starting point, so that the cutting portion 50 begins to mow the lawn.

Meanwhile, the controller 20 may analyze signals received by the receiving portion 30 and determine a position of the main body 10 relative to the boundary wire 110 in response to the analyzed signals.

That is, the controller 20 may analyze signals and determine whether the main body 10 is located inside the operation region (that is, in the closed curved surface formed by the boundary wire) defined by the boundary wire 110 or whether the main body 10 is located outside the operation region defined by the boundary wire 110.

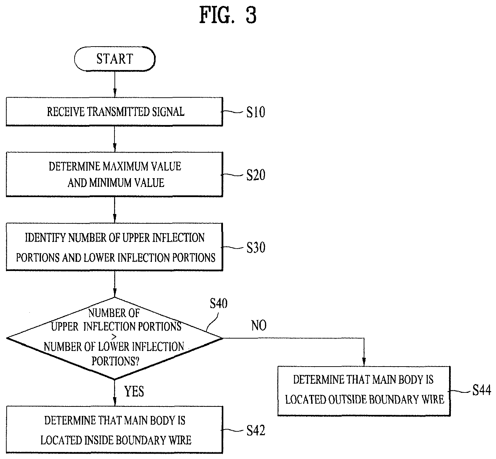

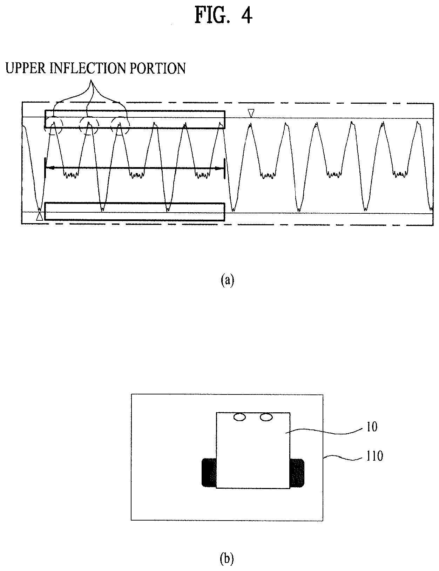

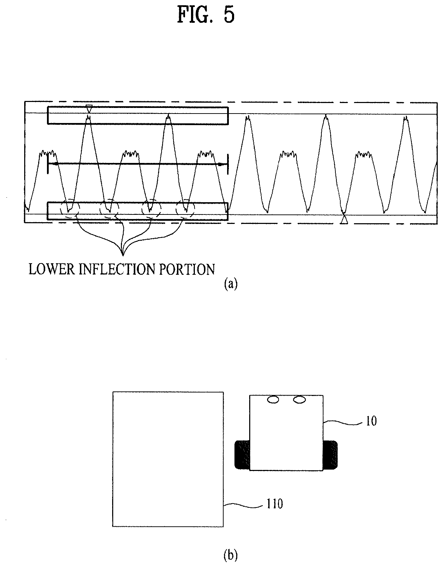

FIG. 3 is a control flowchart according to an embodiment of the present invention. FIG. 4 is a view for explaining arrangement of a waveform received in an inside region defined by the boundary wire, the main body, and the boundary wire. FIG. 5 is a view for explaining arrangement of a waveform received in an outside region defined by the boundary wire, the main body, and the boundary wire. Hereinafter, a description will be given with reference to FIGs. 3 to 5.

Alternating current having a constant cycle may be supplied to the boundary wire 110 in the boundary mark portion 100. Since alternating current has a constant waveform, the boundary wire 110 may generate a signal having a constant cycle, namely an electromagnetic wave.

Meanwhile, the boundary wire 110 may be made of a material through which alternating current may flow.

The receiving portion 30 may receive a signal generated by the boundary wire 110 (S10).

Since alternating current flows in the boundary wire 110, an electromagnetic field may be formed around the boundary wire 110. Accordingly, when the receiving portion 30 approaches the boundary wire 110, an induced voltage may be generated in the receiving portion 30 from the boundary wire 110.

It may be possible to determine a maximum value and a minimum value of the signal received in the receiving portion 30 for a predetermined time (S20).

The receiving portion 30 receives a signal for a predetermined time and then may provide the signal to the controller 20. In this case, the predetermined time is preferably a time for which at least one cycle or more of the signal may be acquired.

Meanwhile, it may also be possible to acquire data having a cycle repeated by approximately 100 times. In this case, the predetermined time may mean approximately 1ms. Of course, the predetermined time may also be variously modified due to properties of the signal.

As shown in FIGs. 4(a) or 5(a), maximum and minimum values of the signal in the waveform thereof are determined by a value of the acquired induced voltage. In each drawing, the maximum value of the signal is a value indicated at the uppermost side of the vertical axis, and the minimum value of the signal is a value indicated at the lowermost side of the vertical axis.

In this case, since all voltages received in the receiving portion 30 have a value greater than 0, all of the maximum and minimum values are greater than 0.

In the present invention, the maximum and minimum values are determined according to the received signal instead of being selected as one value because the receiving portion 30 acquires a signal by the generated induced voltage and the size of the signal varies according to a distance between the boundary wire 110 and the main body 100. That is, if the maximum and minimum values are selected as one value and the selected value is uniformly applied in every situation, erroneous information may be acquired.

When the maximum and minimum values are determined, the number of upper inflection portions present within a constant maximum value range for a relevant time and the number of lower inflection portions present within a constant minimum value range for a relevant time are identified (S30). The constant maximum value range is set to cover values below and/or above the determined maximum value. The constant minimum value range is set to cover values below and/or above the determined minimum value.

Each of the upper inflection portions means a portion at which the waveform of the signal is changed from ascending to descending and each of the lower inflection portions means a portion at which the waveform of the signal is changed from descending to ascending.

In the present invention, the waveform of the received signal is analyzed, and an ascending or descending pattern of a gradient is analyzed when phase is set to the x-axis and amplitude is set to the y-axis.

That is, the upper inflection portion means a portion at which the signal has a gradient from ascending to descending and the lower inflection portion means a portion at which the signal has a gradient from descending to ascending.

In this case, in the waveform present within a range of 10% to 30% on the basis of the maximum and minimum values, the number of the upper and lower inflection portions may be identified. Of course, the range may be variously modified.

Accordingly, as shown in FIG. 4(a), six upper inflection portions may be present in a portion corresponding to the constant maximum value region (constant range), namely in a portion located at the upper side of the signal.

On the other hand, two lower inflection portions may be present in a portion corresponding to the constant minimum value region (constant range), namely in a portion located at the lower side of the signal.

The number of the upper inflection portions is compared with the number of the lower inflection portions (S40). In this case, a position of the main body 10 relative to the boundary wire 110 may be determined using the compared number.

When a signal as shown in FIG. 4(a) is received and thus the number of the upper inflection portions is greater than the number of the lower inflection portions, the main body may be determined to be located inside the operation region defined by the boundary wire (S42).

The position of the main body 10 relative to the boundary wire 110 in this state is shown in FIG. 4(b). That is, when the main body 10 is present in an inside space of the boundary wire 110, the signal may be received in the receiving portion 30 such that the number of the upper inflection portions is greater than the number of the lower inflection portions.

On the other hand, when a signal as shown in FIG. 5(a) is received and thus the number of the lower inflection portions is greater than the number of the upper inflection portions, the main body may be determined to be located outside the operation region defined by the boundary wire (S44).

The position of the main body 10 relative to the boundary wire 110 in this state is shown in FIG. 5(b). That is, when the main body 10 is present in an outside region of the boundary wire 110, the signal may be received in the receiving portion 30 such that the number of the upper inflection portions is less than the number of the lower inflection portions.

In accordance with the present invention, a position of a main body may be identified in relation to a boundary. In particular, it may be possible to sense whether the main body is present inside or outside an operation region by sensing signals generated by a boundary wire.

In addition, it may be possible to sense whether the main body is present in an inner region or an outer region divided by the boundary wire using the boundary wire, regardless of the distance between the boundary wire and the robot.

It will be apparent to those skilled in the art that various modifications and variations can be made in the present invention without departing from the scope of the invention. Thus, it is intended that the present invention covers the modifications and variations of this invention provided they come within the scope of the appended claims and their equivalents.

## Claims

1. A method of controlling a lawn mower robot having a main body (10), comprising:
receiving a signal generated by at least one boundary wire (110) having at least one upper and/or at least one lower inflection portion;
determining a maximum value and a minimum value of the received signal for a predetermined time and a respective constant maximum value range and a respective constant minimum value range; and
determining a position of the main body (10), which receives the signal, relative to the boundary wire (110) by identifying and comparing the number of upper inflection portions present within the constant maximum value range and the number of lower inflection portions present within the constant minimum value range for the predetermined time,
wherein each of the upper inflection portions means a portion at which a waveform of the signal is changed from ascending to descending and each of the lower inflection portions means a portion at which a waveform of the signal is changed from descending to ascending.

2. The method according to claim 1, wherein receiving a signal generated by a boundary wire (110) comprises receiving a signal generated when alternating current having a constant cycle flows in the boundary wire (110).

3. The method according to claim 1 or 2, wherein, in determining a maximum value and a minimum value, the maximum and minimum values are a voltage value and are all a positive value greater than 0.

4. The method according to claim 3, wherein the maximum and minimum values vary according to a distance between the boundary wire (110) and the main body (10).

5. The method according to any preceding claim, wherein, in the determining a position of a main body (10), which receives the signal, relative to the boundary wire (110), when the number of the upper inflection portions is greater than the number of the lower inflection portions, the main body (10) is determined to be located inside an operation region defined by the boundary wire (110).

6. The method according to any preceding claim, wherein, in the determining a position of a main body (10), which receives the signal, relative to the boundary wire (110), when the number of the upper inflection portions is less than the number of the lower inflection portions, the main body (10) is determined to be located outside an operation region defined by the boundary wire (110).

7. A lawn mower robot configured for being operated within an operation region defined by a boundary mark portion which has a boundary wire generating a specific signal, comprising:
a main body (10) which is configured to receive the signal generated by the boundary wire (110) and to be driven in a certain region of the operation region,
wherein the main body (10) comprises:
a receiving portion which is configured to receive the signal transmitted from the boundary wire (110); and
a controller which is configured to analyze a waveform of the signal received in the receiving portion to determine a maximum value and a minimum value for a predetermined time and a respective constant maximum value range and a respective constant minimum value range, configured to identify the number of upper inflection portions present within the constant maximum value range and the number of lower inflection portions present within the constant minimum value range, and configured to compare the number of the upper inflection portions with the number of the lower inflection portions to determine a position of the main body (10) relative to the boundary wire (110), and
wherein each of the upper inflection portions means a portion at which a waveform of the signal is changed from ascending to descending and each of the lower inflection portions means a portion at which a waveform of the signal is changed from descending to ascending.

8. The lawn mower robot according to claim 7, wherein the boundary mark portion (100) is configured to generate a signal when alternating current having a constant cycle is supplied to the boundary wire (110).

9. The lawn mower robot according to claim 7 or 8, wherein the receiving portion is configured to sense an induced voltage generated by the signal provided from the boundary wire (110).

10. The lawn mower robot according to claim 9, wherein the receiving portion is configured to sense a voltage, which is a positive value greater than 0.

11. The lawn mower robot according to any of claims 7 to 10, wherein the controller is configured to determine the maximum and minimum values, which vary according to a distance between the boundary wire (110) and the main body (10).

12. The lawn mower robot according to any of claims 7 to 11, wherein the controller is configured to determine that the main body (10) is located inside an operation region defined by the boundary wire (110) when the number of the upper inflection portions is greater than the number of the lower inflection portions.

13. The lawn mower robot according to any of claims 7 to 12, wherein the controller is configured to determine that the main body (10) is located outside an operation region defined by the boundary wire (110) when the number of the upper inflection portions is less than the number of the lower inflection portions.

## Patentansprüche

1. Verfahren zur Steuerung eines Rasenmähroboters mit einem Hauptkörper (10) mit den Schritten:
Empfangen eines durch mindestens einen Grenzdraht (110) erzeugten Signals mit mindestens einem oberen Wendebereich und/oder mindestens einem unteren Wendebereich,
Bestimmen eines Maximalwerts und eines Minimalwerts des empfangenen Signals während eines bestimmten Zeitraums und eines entsprechenden konstanten Maximalwertbereichs und eines entsprechenden konstanten Minimalwertbereichs und Bestimmen einer Position des Hauptkörpers (10), der das Signal empfängt, relativ zum Grenzdraht (110) durch Ermitteln und Vergleichen der sich während des bestimmten Zeitraums im konstanten Maximalwertbereich befindenden Anzahl an oberen Wendebereichen und der sich während des bestimmten Zeitraums im konstanten Minimalwertbereich befindenden Anzahl an unteren Wendebereichen,
wobei die oberen Wendebereiche jeweils einen Bereich darstellen, in dem eine Wellenform des Signals von aufsteigend zu absteigend wechselt, und die unteren Wendebereiche jeweils einen Bereich darstellen, in dem eine Wellenform des Signals von absteigend zu aufsteigend wechselt.

2. Verfahren nach Anspruch 1, wobei das Empfangen eines durch einen Grenzdraht (110) erzeugten Signals ein Empfangen eines Signals umfasst, das erzeugt wird, wenn im Grenzdraht (110) Wechselstrom mit einer konstanten Periodenlänge fließt.

3. Verfahren nach Anspruch 1 oder 2, wobei bei der Bestimmung eines Maximal- und eines Minimalwerts die Maximal- und Minimalwerte ein Spannungswert und jeweils ein positiver Wert über 0 sind.

4. Verfahren nach Anspruch 3, wobei die Maximal- und Minimalwerte entsprechend eines Abstands zwischen dem Grenzdraht (110) und dem Hauptkörper (10) variieren.

5. Verfahren nach einem der vorstehenden Ansprüche, wobei bei der Bestimmung einer Position eines Hauptkörpers (10), der das Signal empfängt, relativ zum Grenzdraht (110), wenn die Anzahl der oberen Wendebereiche größer ist als die Anzahl der unteren Wendebereiche, bestimmt wird, dass sich der Hauptkörper (10) innerhalb eines durch den Grenzdraht (110) definierten Betriebsbereichs befindet.

6. Verfahren nach einem der vorstehenden Ansprüche, wobei bei der Bestimmung einer Position eines Hauptkörpers (10), der das Signal empfängt, relativ zum Grenzdraht (110), wenn die Anzahl der oberen Wendebereiche kleiner ist als die Anzahl der unteren Wendebereiche, bestimmt wird, dass sich der Hauptkörper (10) außerhalb eines durch den Grenzdraht (110) definierten Betriebsbereichs befindet.

7. Rasenmähroboter zum Betrieb innerhalb eines Betriebsbereichs, der durch einen Grenzmarkierungsabschnitt definiert ist, der einen Grenzdraht aufweist, der ein bestimmtes Signal erzeugt, mit
einem Hauptkörper (10), der ausgelegt ist, das vom Grenzdraht (110) erzeugte Signal zu empfangen und in einem bestimmten Bereich des Betriebsbereichs gesteuert zu werden,
wobei der Hauptkörper (10) aufweist:
einen Empfangsbereich zum Empfangen des vom Grenzdraht (110) gesandten Signals und
eine Steuereinheit zum Analysieren einer Wellenform des im Empfangsbereich empfangenen Signals, um einen Maximal- und einen Minimalwert während eines bestimmten Zeitraums und einen entsprechenden konstanten Maximalwertbereich und einen entsprechenden konstanten Minimalwertbereich zu bestimmen, zur Ermittlung der Anzahl der sich im konstanten Maximalwertbereich befindenden oberen Wendebereiche und der Anzahl der sich im konstanten Minimalwertbereich befindenden unteren Wendebereiche und zum Vergleichen der Anzahl der oberen Wendebereiche mit der Anzahl der unteren Wendebereiche, um eine Position des Hauptkörpers (10) relativ zum Grenzdraht (110) zu bestimmen und
wobei die oberen Wendebereiche jeweils einen Bereich darstellen, in dem eine Wellenform des Signals von aufsteigend zu absteigend wechselt, und die unteren Wendebereiche jeweils einen Bereich darstellen, in dem eine Wellenform des Signals von absteigend zu aufsteigend wechselt.

8. Rasenmähroboter nach Anspruch 7, wobei der Grenzmarkierungsabschnitt (100) ausgelegt ist, ein Signal zu erzeugen, wenn dem Grenzdraht (110) Wechselstrom mit einer konstanten Periodenlänge zugeführt wird.

9. Rasenmähroboter nach Anspruch 7 oder 8, wobei der Empfangsbereich ausgelegt ist, eine induzierte Spannung abzutasten, die von dem vom Grenzdraht (110) gelieferten Signal erzeugt wird.

10. Rasenmähroboter nach Anspruch 9, wobei der Empfangsbereich ausgelegt ist, eine Spannung, die einen positiven Wert über 0 aufweist, abzutasten.

11. Rasenmähroboter nach einem der Ansprüche 7 bis 10, wobei die Steuereinheit ausgelegt ist, die Maximal- und Minimalwerte zu bestimmen, die entsprechend einem Abstand zwischen dem Grenzdraht (110) und dem Hauptkörper (10) variieren.

12. Rasenmähroboter nach einem der Ansprüche 7 bis 11, wobei die Steuereinheit ausgelegt ist zu bestimmen, dass sich der Hauptkörper (10) innerhalb eines Betriebsbereichs befindet, der durch den Grenzdraht (110) definiert ist, wenn die Anzahl der oberen Wendebereiche größer ist als die Anzahl der unteren Wendebereiche.

13. Rasenmähroboter nach einem der Ansprüche 7 bis 12, wobei die Steuereinheit ausgelegt ist zu bestimmen, dass sich der Hauptkörper (10) außerhalb eines Betriebsbereichs befindet, der durch den Grenzdraht (110) definiert ist, wenn die Anzahl der oberen Wendebereiche kleiner ist als die Anzahl der unteren Wendebereiche.

## Revendications

1. Procédé de commande d'un robot tondeuse ayant un corps principal (10), comprenant :
la réception d'un signal généré par au moins un câble périphérique (110) ayant au moins une partie d'inflexion supérieure et/ou au moins une partie d'inflexion inférieure ;
la détermination d'une valeur maximale et d'une valeur minimale du signal reçu pour un temps prédéterminé et une plage de valeur maximale constante respective et une plage de valeur minimale constante respective ; et
la détermination d'une position du corps principal (10), qui reçoit le signal, par rapport au câble périphérique (110) par identification et comparaison du nombre de parties d'inflexion supérieure présentes à l'intérieur de la plage de valeur maximale constante et du nombre de parties d'inflexion inférieure présentes à l'intérieur de la plage de valeur minimale constante pour le temps prédéterminé,
dans lequel chacune des parties d'inflexion supérieure désigne une partie au niveau de laquelle une forme d'onde du signal est modifiée d'ascendante à descendante et chacune des parties d'inflexion inférieure désigne une partie au niveau de laquelle une forme d'onde du signal est modifiée de descendante à ascendante.

2. Procédé selon la revendication 1, dans lequel la réception d'un signal généré par un câble périphérique (110) comprend la réception d'un signal généré lorsqu'un courant alternatif ayant un cycle constant circule dans le câble périphérique (110).

3. Procédé selon la revendication 1 ou 2, dans lequel, lors de la détermination d'une valeur maximale et d'une valeur minimale, les valeurs maximales et minimales sont une valeur de tension et sont toutes une valeur positive supérieure à 0.

4. Procédé selon la revendication 3, dans lequel les valeurs maximales et minimales varient en fonction d'une distance entre le câble périphérique (110) et le corps principal (10).

5. Procédé selon l'une quelconque des revendications précédentes, dans lequel, lors de la détermination d'une position d'un corps principal (10), qui reçoit le signal, par rapport au câble périphérique (110), lorsque le nombre de parties d'inflexion supérieure est supérieur au nombre de parties d'inflexion inférieure, le corps principal (10) est déterminé pour être situé à l'intérieur d'une région de fonctionnement définie par le câble périphérique (110).

6. Procédé selon l'une quelconque des revendications précédentes, dans lequel, lors de la détermination d'une position d'un corps principal (10), qui reçoit le signal, par rapport au câble périphérique (110), lorsque le nombre de parties d'inflexion supérieure est inférieur au nombre de parties d'inflexion inférieure, le corps principal (10) est déterminé pour être situé à l'extérieur d'une région de fonctionnement définie par le câble périphérique (110).

7. Robot tondeuse configuré pour être exploité à l'intérieur d'une région de fonctionnement définie par une partie de marquage périphérique qui a un câble périphérique générant un signal spécifique, comprenant :
un corps principal (10) qui est configuré pour recevoir le signal généré par le câble périphérique (110) et pour être entraîné dans une certaine région de la région de fonctionnement,
dans lequel le corps principal (10) comprend :
une partie de réception qui est configurée pour recevoir le signal transmis du câble périphérique (110) ; et
un dispositif de commande qui est configuré pour analyser une forme d'onde du signal reçu dans la partie de réception pour déterminer une valeur maximale et une valeur minimale pour un temps prédéterminé et une plage de valeur maximale constante respective et une plage de valeur minimale constante respective, configuré pour identifier le nombre de parties d'inflexion supérieure présentes à l'intérieur de la plage de valeur maximale constante et le nombre de parties d'inflexion inférieure présentes à l'intérieur de la plage de valeur minimale constante, et configuré pour comparer le nombre de parties d'inflexion supérieure avec le nombre de parties d'inflexion inférieure pour déterminer une position du corps principal (10) par rapport au câble périphérique (110), et
dans lequel chacune des parties d'inflexion supérieure désigne une partie au niveau de laquelle une forme d'onde du signal est modifiée d'ascendante à descendante et chacune des parties d'inflexion inférieure désigne une partie au niveau de laquelle une forme d'onde du signal est modifiée de descendante à ascendante.

8. Robot tondeuse selon la revendication 7, dans lequel la partie de marquage périphérique (100) est configurée pour générer un signal lorsqu'un courant alternatif ayant un cycle constant est fourni dans le câble périphérique (110).

9. Robot tondeuse selon la revendication 7 ou 8, dans lequel la partie de réception est configurée pour détecter une tension induite générée par le signal fourni par le câble périphérique (110).

10. Robot tondeuse selon la revendication 9, dans lequel la partie de réception est configurée pour détecter une tension, qui est une valeur positive supérieure à 0.

11. Robot tondeuse selon l'une quelconque des revendications 7 à 10, dans lequel le dispositif de commande est configuré pour déterminer les valeurs maximales et minimales, qui varient en fonction d'une distance entre le câble périphérique (110) et le corps principal (10).

12. Robot tondeuse selon l'une quelconque des revendications 7 à 11, dans lequel le dispositif de commande est configuré pour déterminer que le corps principal (10) est situé à l'intérieur d'une région de fonctionnement définie par le câble périphérique (110) lorsque le nombre de parties d'inflexion supérieure est supérieur au nombre de parties d'inflexion inférieure.

13. Robot tondeuse selon l'une quelconque des revendications 7 à 12, dans lequel le dispositif de commande est configuré pour déterminer que le corps principal (10) est situé à l'extérieur d'une région de fonctionnement définie par le câble périphérique (110) lorsque le nombre de parties d'inflexion supérieure est inférieur au nombre de parties d'inflexion inférieure.
